# EUROPEAN PATENT APPLICATION

(11) **EP 1 729 502 A2**
(43) Date of publication of application: **06.12.2006**
(21) Application number: 06114554.6
(22) Date of filing: 25.05.2006
(51) Int. Cl.: H04N 1/44, H04N 1/21

(54) **Digital camera system with recyclable memory card**

(30) Priority: 11.01.2006 US 329073; 26.09.2005 US 720057 P; 31.05.2005 US 685654 P
(71) Applicant: M-Systems Flash Disk Pioneers Ltd., Kfar Saba 44425 (IL)
(72) Inventor: Teicher, Mordechai, Hod Hasharon (IL); Ziv, Aran, Hertzliya (IL); Bynchkov, Eyal, Hod Hasharon (IL)
(74) Representative: Murgatroyd, Susan Elizabeth

(57) **Abstract**

A memory device (110) includes a non-volatile memory (112), a medium (114) having instructions for operating the memory device and a processor (116) for executing the instructions. The minimal instructions are instructions for storing, in the non-volatile memory (112), original pictures corresponding to source pictures received from a camera (150), and instructions for producing degraded pictures corresponding to the original pictures. The original pictures are stored either encrypted or clear. The memory device (110) is locked after access of the original pictures by an authorized printer (130) but may be unlocked by the camera (150) from which the original pictures were received. The scope of the invention also includes a corresponding method of digital photography.

## Description

The present invention relates to digital storage devices, and in particular to such storage devices used for digital photography.

Digital cameras have become commonplace, replacing more and more film cameras in both professional and amateur markets. New possibilities for storing, viewing, processing and printing photographs are now available to anyone having a personal computer and imaging software. However, many users of digital cameras do not use a personal computer, while many users of personal computers prefer the service of a photo shop over printing at home.

Most digital cameras record pictures onto a removable memory card. While conventional photographic film is disposable and can be used only once, memory cards can be reused thousands of times. Many digital camera users have only a single, high-capacity and expensive memory card. Users of such digital cameras use their personal computers to upload the digital pictures from the cards and then burn copies onto CD-ROMs for ordering paper prints at a photo shop. Other users of digital cameras come with their camera or memory card to the photo shop and wait until their photo files are copied to the shop's computer. Many users send their digital pictures to a photo shop through the Internet, and some users approach automated photo printing kiosks for printing. However, the main print ordering method used with photographic films, dropping-off an envelope at a photo shop, is generally unavailable in digital photography because of the cost of the memory cards.

There is thus a need for a system and method that allows users of digital cameras to drop their memory cards at a photo shop without being concerned about the cost of the cards.

By "memory card" or "card" is meant a storage device that can be inserted into and removed from a digital camera and that is used to store digital pictures. As understood herein., a "digital camera" (or "camera" for short) can be a dedicated freestanding device or can form part of a larger device such as a video camera with still capability, a cellular telephone or a handheld computer.

By "digital picture" or "picture" is meant an electronic representation of a still picture taken by a digital camera. A "source picture" is a digital picture as taken by the camera's sensor and (optionally) processed by the camera's processor; the source picture represents a high-quality picture, adequate for printing, sent by the camera's processor to a memory card. Source pictures are known in the art either to be in raw format, i. e. as captured by the camera's sensor, or to include in-camera processing for obtaining white balance, sharpening, noise reduction and compression. Some cameras may produce more than one source picture from a single shot, for example both raw and compressed versions, or a sequence of pictures that vary by in-camera processing parameters such as white balance settings. However, thumbnails, if such are produced by the camera's processor for being presented on the camera's own display, are not considered source pictures herein because thumbnails do not represent high quality pictures for printing. An "original picture" is a copy of a source picture stored in a memory card. An original picture can be stored as a "clear original picture" recognizable by standard hosts or as an "encrypted original picture" that can be decrypted only by authorized hosts.

By "host" is meant any electronic device that can be operationally connected to a card and that can exchange data with the card. Such hosts include, but are not limited to, digital cameras, cellular telephones, personal computers of any type and size, commercial printers, or personal printers with card slots. By "standard host'' is meant a host that does not include the provisions of the present invention for identifying the host as an "authorized host".

A memory card is said to be "locked" if the card is set to prevent the reading of the digital pictures stored therein, even by an authorized host. The locking of a memory card is reversible in the sense that the memory card can be "unlocked" for future reading by erasing the digital pictures. In one embodiment of the present invention, a locked memory card can be unlocked, for the reading of the digital pictures stored thereon, by the camera that took the digital pictures, without having to erase the digital pictures. A memory card is said to be "disabled" if the card is set so that only an authorized host can exchange data with the card.

The present invention provides systems and functionalities for allowing a photographer to use a memory card similarly to using conventional film, by dropping the card at a photo shop for printing.

According to the present invention there is provided a memory device including: (a) a nonvolatile memory; (b) a medium bearing instructions for: (i) storing in the nonvolatile memory, as a corresponding original picture, each of at least one source picture received from a camera, and (ii) for each at least one original picture: producing a corresponding degraded picture; and (c) a processor for executing the instructions.

According to the present invention there is provided a method of digital photography, including the steps of: (a) taking at least one source picture, using a camera; (b) for each at least one source picture, storing a corresponding original picture in a memory device; and (c) for each at least one original picture: producing a corresponding degraded picture, by the memory device.

A memory device of the present invention includes a nonvolatile memory, a processor, and a medium that bears instructions that, when executed by the processor, implement the methods of the present invention. The basic set of instructions includes instructions for storing, in the nonvolatile memory, as a corresponding original picture, each of one or more source pictures received from a camera, and instructions for, for each original picture, producing a corresponding degraded picture.

According to one preferred embodiment of the memory device of the present invention, the instructions for producing the degraded picture(s) include instructions for producing the degraded picture(s) and storing the degraded picture(s) in the nonvolatile memory when the corresponding original picture(s) is/are stored in the nonvolatile memory. According to another preferred embodiment of the memory device of the present invention, the instructions for producing the degraded picture(s) include instructions for producing the degraded picture(s) and storing the degraded picture(s) in the nonvolatile memory while the memory device is idle. According to yet another preferred embodiment of the memory device of the present invention, the instructions for producing the degraded picture(s) include instructions for, in response to a request by a host of the memory device to access one of the original pictures, to produce the corresponding degraded picture and then to send the corresponding degraded picture to the host.

According to one preferred embodiment of the memory device of the present invention, the instructions for storing the original picture(s) in the nonvolatile memory include instructions for storing the original picture(s) in the nonvolatile memory only in encrypted form. According to another preferred embodiment of the memory device of the present invention, the instructions for storing the original picture(s) in the nonvolatile memory include instructions for storing the original picture(s) in the nonvolatile memory in clear (*i.e.*, unencrypted) form. In the latter case, most preferably the medium also bears instructions for, in response to a request by a host of the memory device to access an original picture, encrypting the requested original picture and denying the host access to the clear original picture while allowing the host access to the encrypted version of the requested original picture. Alternatively, the medium also bears instructions for allowing access to the clear original picture(s) only to an authorized host of the memory device.

Preferably, the medium also bears instructions for locking the memory device upon termination of an access of the original picture(s) by an authorized printer. Most preferably, the medium also bears instructions for unlocking a memory device, that has been so locked, by the camera from which the memory device received the original picture(s).

Preferably, the medium also bears instructions for verifying that the memory device is operational, for producing an image of a quality stamp if the memory device turns out to be operational, and for rendering the memory device permanently inoperative if the memory device turns out not to be operational.

Preferably, the medium also bears instructions for disabling the memory device upon reaching a predetermined expiration date.

According to the basic method of the present invention, a camera is used to take one or more source pictures, (a) corresponding original picture(s) is/are stored in a memory device, and the memory device produces (a) corresponding degraded picture(s): for example when the original picture(s) is/are stored (in which case the degraded picture(s) also is/are stored in the memory device) or while the memory device is idle (in which case the degraded picture(s) also is/are stored in the memory device) or when a host requests access to an original picture (in which case the corresponding degraded picture is produced and is sent to the host).

According to one preferred embodiment of the method of the present invention, the original picture(s) is/ are stored only in encrypted form. According to another preferred embodiment of the method of the present invention, the original picture(s) is/are stored in clear form. In response to a request by a host of the memory device to access one of the original pictures, the requested original picture is encrypted. The requesting host is allowed access to the encrypted picture but is denied access to the clear original picture. Alternatively, only authorized hosts of the memory device are allowed access to the clear original pictures.

Preferably, the memory device is locked upon termination of an access of the original picture(s) by an authorized printer. Most preferably, a memory device that is so locked is unlocked by the camera that took the source picture(s).

Preferably, the memory device verifies its own operability. If the operability is verified, the memory device indicates that status by producing an image of a quality stamp. Otherwise, the memory device renders itself permanently inoperative.

Preferably, the memory device is disabled upon reaching a predetermined expiration date.

Essentially, the present invention implements one or more of the following features:
- a card is received from a printing service provider against a monetary deposit; the deposit is redeemed upon placing an order for prints or receiving another card;
- full-quality prints and digital copies of the original pictures can be obtained only at authorized photo shops; otherwise, limited access is possible through thumbnails and/or copies degraded by one or more of size (*e.g.* resolution), color or marking;
- the cards can be reused by others after being erased by the printing machine and/or being disabled by the card's controller;
- cards become inoperative for further use (except printing) after a predetermined expiration period.

The features described above offer remedies to the following potentials concerns:
- the printing service provider expects the cards to be used for generating printings and be reused as often as possible; any alternative uses are preferably discouraged; the deposit, expiration and limited access to picture files are devised accordingly;
- the user may be concerned about his or her privacy, when a card reaches other hands; reliable erasure upon printing protects the user's privacy.

The invention is herein described, by way of example only, with reference to the accompanying drawings, wherein:
FIG. 1 is a high-level block diagram of a system of the present invention;
FIG. 2 illustrates the data stored in an embodiment of the memory card of FIG. 1 that stores both original pictures and degraded pictures;
FIG. 3 summarizes the features of the memory card of FIG. 1;
FIG. 4 is a flowchart of photography using the camera and memory card of FIG. 1;
FIGs. 5-9 are flowcharts of various modes of access to the memory card of FIG. 1;
FIG. 10 is a flowchart of a self-test of the memory card of FIG. 1;
FIG. 11A is a flowchart of the setting of an expiration date in the memory card of FIG. 1;
FIG. 11B is a flowchart of photography using the camera and memory card of FIG. I with an expiration date set in the memory card of FIG. 1;
FIG. 12A is a flowchart of the provision of editing instructions;
FIG. 12B is a flowchart of the implementation of editing instructions;
FIGs. 13A and 13B illustrate an embodiment of the memory card of FIG. 1 that stores original pictures and creates degraded pictures as needed;
FIG. 14 illustrates an embodiment of the memory card of FIG. 1 that stores original pictures and creates encrypted pictures as needed;
FIG. 15 illustrates an embodiment of the memory card of Fig. I that stores encrypted pictures.

The present invention is of a memory device and an associated system for digital photography. Specifically, using the present invention, a user of a digital camera can have memory cards printed the way a user of an analog camera has photographic film developed and printed.

The principles and operation of digital photography according to the present invention may be better understood with reference to the drawings and the accompanying description.

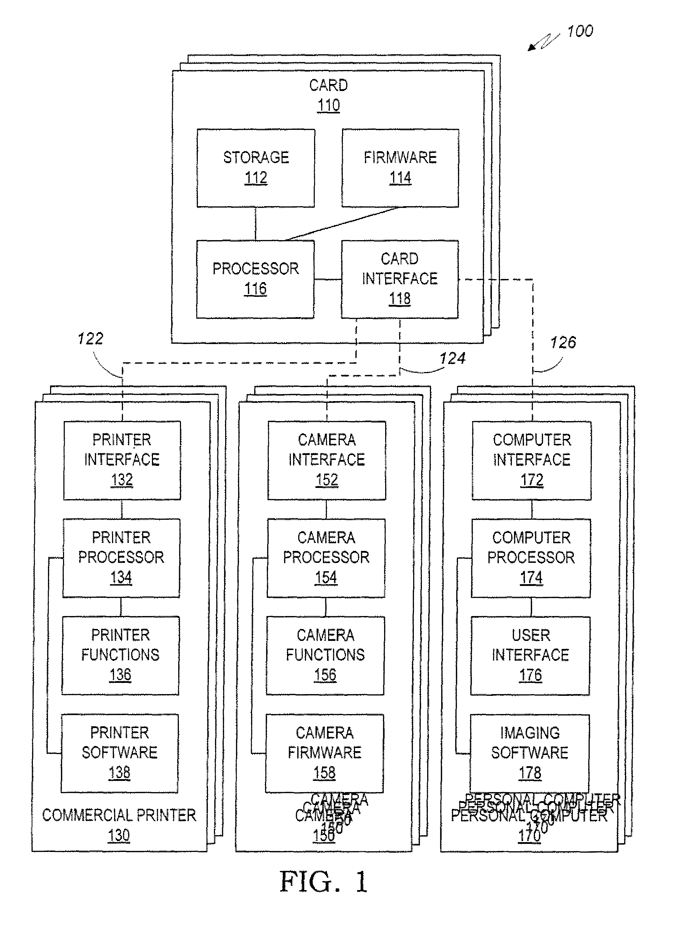

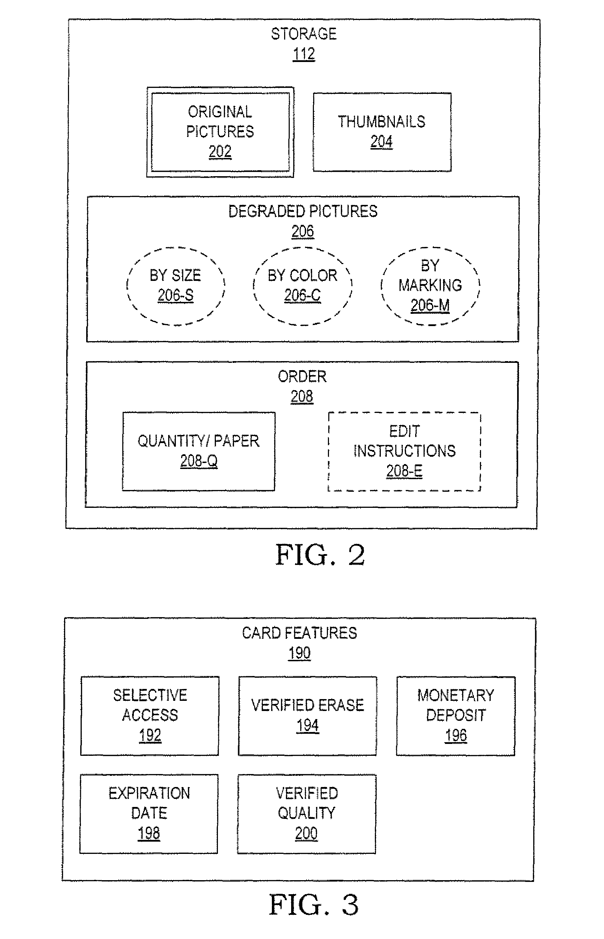

Reference is made to Figure 1, which is a high-level schematic block diagram of a preferred embodiment **100** of a system constructed in accordance to the present invention. Card **110** is a camera memory card that includes non-volatile storage **112** (*e.g.* a flash memory or micro magnetic disk drive) that stores images and order data, as described below with reference to Figure 3; processor **116** operates under firmware **114** that controls the access and management of storage **112;** and card interface **118** provides mechanical, electrical and logical interfaces with external devices such as camera **150,** commercial printer **130** and personal computer **170.** Camera **150** takes photos using camera functions **156,** optionally transforms the photos to standard image file format (such as jpeg or tiff) using camera processor **154** that runs under camera firmware **158,** and interfaces with card **110** via camera interface **152** to send the source pictures to card **110.** Commercial printer **130** receives card **110** and interfaces with card **110** via printer interface **132** for printing photos using printer functions **136** controlled by printer processor **134** running under printer software **138.** Personal computer **170** receives card **110** via computer interface **172** and is operated by a user for viewing, selecting and editing digital pictures stored in storage **112.**

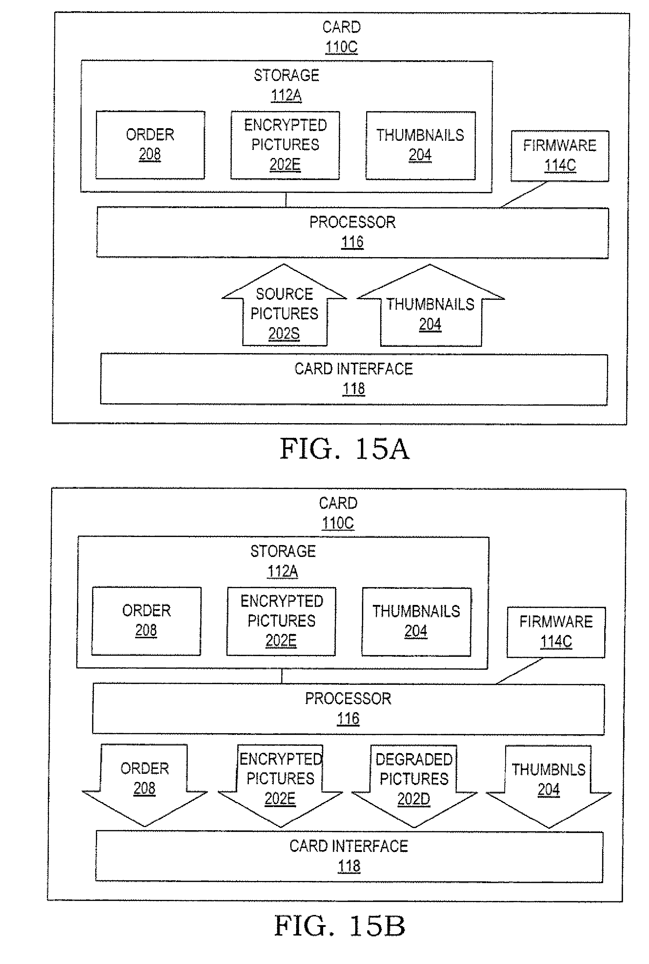

Figure 2 illustrates the contents of storage **112** of card **110** of Figure 1. Original pictures **202** are picture files that represent the full quality of the picture as taken by camera functions **156** and processed by camera processor **154.** It should be noted that such picture files conventionally include a selectable level of processing by camera processor **154,** such as compression or white balance. As described below with respect to Figure 15A, in some embodiments original pictures **202** are encrypted by processor **116** and are stored in encrypted form. Thumbnails **204** optionally are also conventionally produced by camera processor **154** for providing quick review, on the screen of camera **150,** of the pictures stored in storage **112,** for viewing and then selecting for erasure or printing. Degraded pictures **206** are degraded versions of original pictures **202,** produced by processor **116.** Degraded pictures **206** are devised to provide limited viewing, editing and Web-publishing to a user, but to be inadequate for quality printing. Each of degraded pictures **206** is degraded by at least one of the following degradation methods:
- degraded by size: **206-S** is a reduced-resolution picture, for example to the size of 480x360 pixels (compared to at least 1600x1200 pixels of typical originals);
- degraded by color: **206-C** reduces the color depth from at least 24b (millions of colors, typical in most originals) to, for example, 8b (256 colors, such as in grayscale representation);
- degraded by marking: **206-M** is implemented by adding extra visible information to a picture, e.g. by text or graphical watermarks.

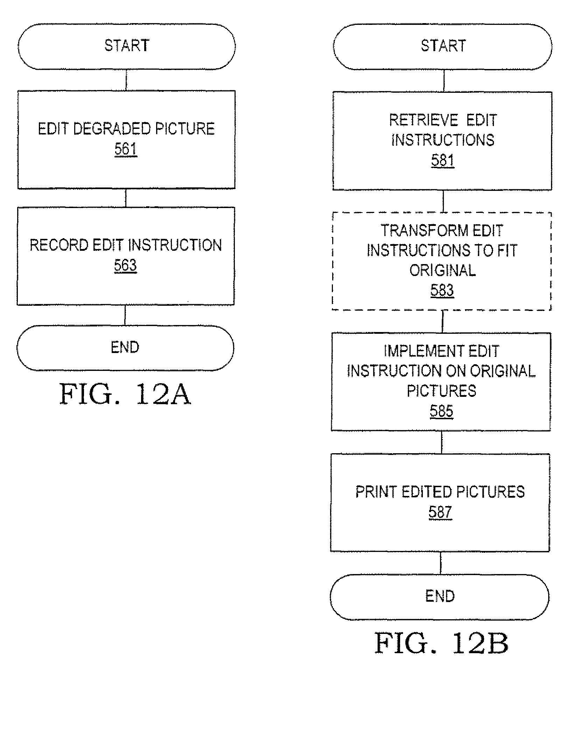

Order **208** stores user commands related to ordering prints from commercial printer **130** of Figure 1; such commands specify quantity and paper type and size **208-Q,** and optionally also edit instructions **208-E,** such as cropping, color correction etc. as is customary in digital photograph processing (see Figures 12A-B below). Order **208** is responsive to user commands entered in camera **150** or personal computer **170,** and is stored either as separate files or as instruction fields within picture files.

It will be noted that thumbnails themselves are degraded representations of the original images. To clearly distinguish between "thumbnails" and "degraded images", as herein understood, "thumbnails" are optionally produced by the camera's processor, while "degraded images" are produced by the card's processor.

Reference is made to Figure 3, which symbolically summarizes features, at least one of which is included in various embodiments of the present invention. These features are described in detail below. Selective access **192** provides authorized commercial printers **130** exclusive access to original pictures **202,** while other devices such as cameras, personal computers or unauthorized commercial printers obtain access only to thumbnails **204,** degraded pictures **206** and order **208.** Verified erase **194** is an algorithm implemented within card **110** and/or an authorized trusted commercial printer **130,** to ensure that a card is properly erased and "sanitized" before being "recycled", i. e. handed to another user. Verified erase **194** is important to protect the privacy of the previous user. Monetary deposit **196** records in card **110** the details of a commercial entity that lends the card to users against a monetary deposit, to be redeemed in the future for prints or another card. The record in monetary deposit **196** is used by the redeeming commercial entity for billing and accounting purpose. Expiration date **198** includes a date after which card **110** will be disabled for any further operation except printing at an authorized commercial printer **130,** to encourage prompt printing of the pictures stored in card **110.** Verified quality **200** is a visible indication for a user, certifying the quality of a "recycled" card **110** after card **110** has successfully passed a built-in test.

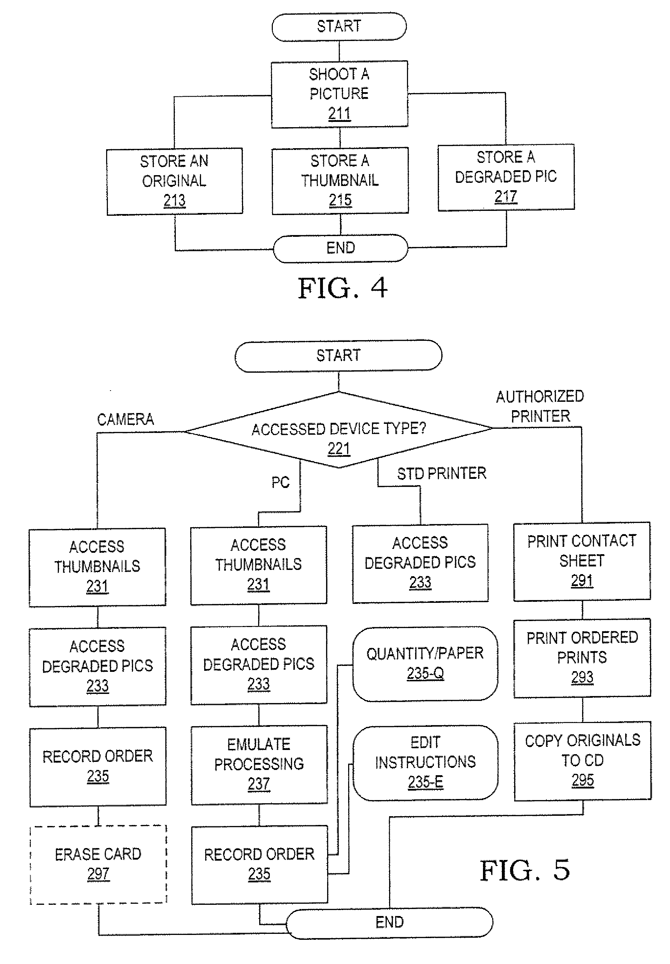

Figure 4 is a flowchart describing the use of camera **150** having card **110.** In a step **211,** the user shoots a photo in the conventional manner. The photo is transformed by camera processor **116** into a source picture. In a step **213** the source picture is sent from camera processor **116** to card **110** and is stored as an original picture in the secure storage area for original pictures **202** within storage **112.** In a step **215** a thumbnail of the picture is stored as a thumbnail in thumbnails **204,** and in a step **217,** the picture is processed by card processor **116** to produce a degraded version of the picture to be stored in the area for degraded pictures **206,** It will be noted that step **217** is executed autonomously by card processor **116,** thus making it transparent to both the shooting habits of the user and the design of camera **150.** This implies that card **110** can be used with existing user base and camera models.

While steps **213, 215** and **217** can be executed essentially concurrently for each picture taken in step **211,** in an alternative embodiment step **213** is executed immediately after step **211,** while step **217** can be deferred to be executed by processor **116** (from an already-stored original picture) at an idle moment when card **110** is energized by camera **150** but is not busy with receiving or sending data. In this way, the processing and storage by step **217** do not slow down picture-taking. It also will be noted that step **215** is not mandatory, and a previously-stored degraded picture can be used for reviewing that picture on the camera's screen.

Figure 5 describes modes of access to card **110** of Figure 1 with a camera **150,** a personal computer **170,** a standard printer **130** or an authorized printer **130.** The type of device being used to access card **110** is identified by a step **221.** With a camera **150,** in addition to taking pictures as described in Figure 4 and not repeated here, camera **150** can access thumbnails (option **231)** for reviewing previously-taken pictures and possibly recording orders (option **235)** onto order area **208** of storage **112;** under option **233** camera **150** can also access degraded pictures **206** if printing from camera **150** directly to a printer **130** is supported, or if camera **150** is used as a conduit to send pictures to a personal computer **170.** Also, camera **150** can erase card **110,** including the protected area of card **110** for original pictures **202.** It should be noted, however, that camera **150** is not allowed to access the original pictures **202** after shooting them.

Still in Figure 5, a personal computer **170** can access thumbnails and degraded pictures (options **231** and **233,** respectively), that can be viewed and possibly published on the Internet. In option **237** personal computer **170** can also emulate on the degraded pictures a processing intended for the original pictures, depending on the nature of degradation. For example, if the pictures are degraded by size, processing can still relate to cropping and color-balancing. Pictures degraded by color are still useful for emulating cropping, while marked pictures can support all types of processing, including, for example, red-eye removal. In option **235** for recording an order, the order can be specified by definition **235-Q** of quantity and paper size and type, and also include the edit instructions **235-E** created during the emulated processing **237.** These instructions affect printing **293** as explained below.

When step **221** of Figure 5 determines that the device accessing card **110** is a standard printer **130** (commercial or home printer) connected to card **110** through a reader or through camera **150,** only degraded pictures are accessible for printing. If an authorized commercial printer **130** is connected, however, that printer **130** has an option **291** for printing contact sheets, and an option **293** for printing full-quality original pictures from storage **202** according to an order recorded previously under option **235** including quantity and paper type and size **235-Q,** and edit instructions **235-E.** If such orders have not been recorded, then such quality printing of the original pictures can be made by default of one print per original image or follow the instructions of a written form, as customary with conventional film-based orders. Option **295** also allows an authorized printer **130** to copy original pictures **202** onto a medium such as CD-ROM for further use by the user. The identification by card **110** of a host as an authorized printer is made by cryptographic exchange between card processor **116** and printer processor **134** that proves to card **110** that the host knows a secret (preferably a cryptographic key) known only to authorized printers. Such identification of devices as trusted or authorized devices is well-known in the art and therefore is not elaborated further herein.

It should be noted that the operation and options of Figure 5 are directed at ensuring that only an authorized commercial printer **130** can access original pictures **202** after original pictures **202** have been received from camera **150.** Not even camera **150** can access original pictures **202,** except to erase original pictures **202.** All other hosts of card **110** have access to thumbnails **204** and degraded pictures **206** only, offering limited functionality of viewing, Web-publishing, editing and ordering. This makes it worth the while, commercially, of the operator of authorized commercial printer **130** that is protected here, to subsidize card **110.** This relates to the feature of selective access **192** of Figure 3.

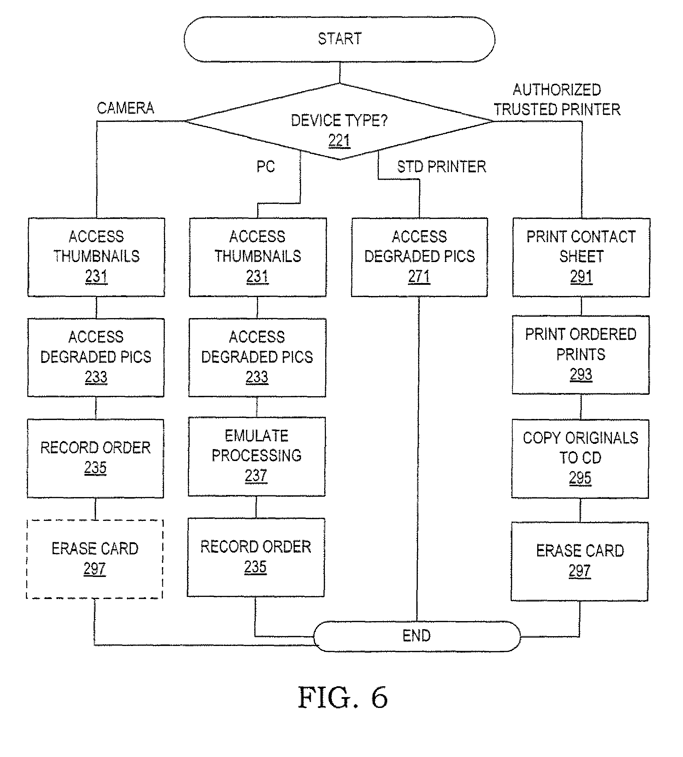

Figure 6 includes all the options of Figure 5 (under the corresponding block numbers), and adds one additional option related to the feature of verified erase **194** of Figure 3. In Figure 6, authorized commercial printer **130** is not only authorized to access original pictures **202,** but is also trusted by users to completely erase and sanitize cards (a step **297)** after printing ordered prints (step **293)** and/or copying the originals to a CD (step **295).** This means that once the user receives quality prints and/or original copies on a CD, s/he can be sure that the card has been properly erased and his/her private pictures will not by accessible when the card is reused by another. Methods for sanitizing cards, *i.e.* erasing them reliably, are taught in US Patent Application Publication No. 2004/0188710,which document is incorporated by reference for all purposes as if fully set forth herein.

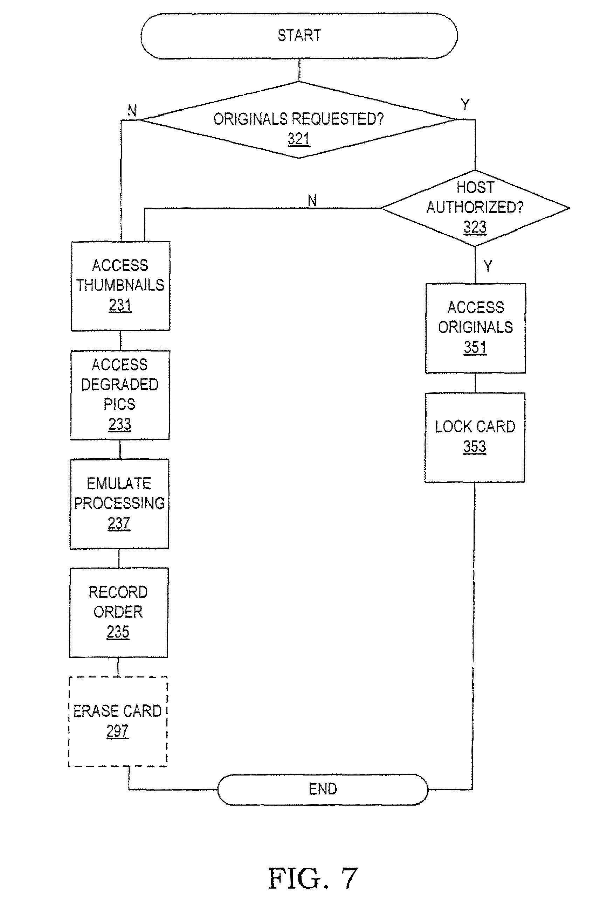

Figure 7 also relates to the feature of verified erase **194** of Figure 3. However, it is presumed in the embodiment of Figure 7 that the user does not trust commercial printer **130** but does trust card **110** to erase itself after original pictures **202** have been accessed for printing or copying. In this case, any host (camera **150,** personal computer **170,** printer **130,** etc.) can access thumbnails (option **231),** degraded pictures (option **233),** emulate processing on degraded pictures (option **237),** or erase cards (option **297).** However, when a host attempts accessing original pictures **202** (step **321),** it is determined in step **321** whether that host is an authorized printer. An authorized printer is allowed a single session of access to originals **351** (for printing and copying), but when the session is over, card **110** is locked in a step **353** and must be thoroughly erased in order to become functional again. The programming of this locking, embedded in firmware **114** of card **110,** ensures that the very fact that the user has received hi-quality prints and/or original copies on a CD, proves that the included pictures have been protected by the card processor against further access when the card is recycled (*i.e.* reused by another). Any host that attempts to access card **110** after card **110** has been locked is denied access to original pictures **202** as well as to thumbnails **204** and to degraded pictures **206,** thus protecting the privacy of the original user.

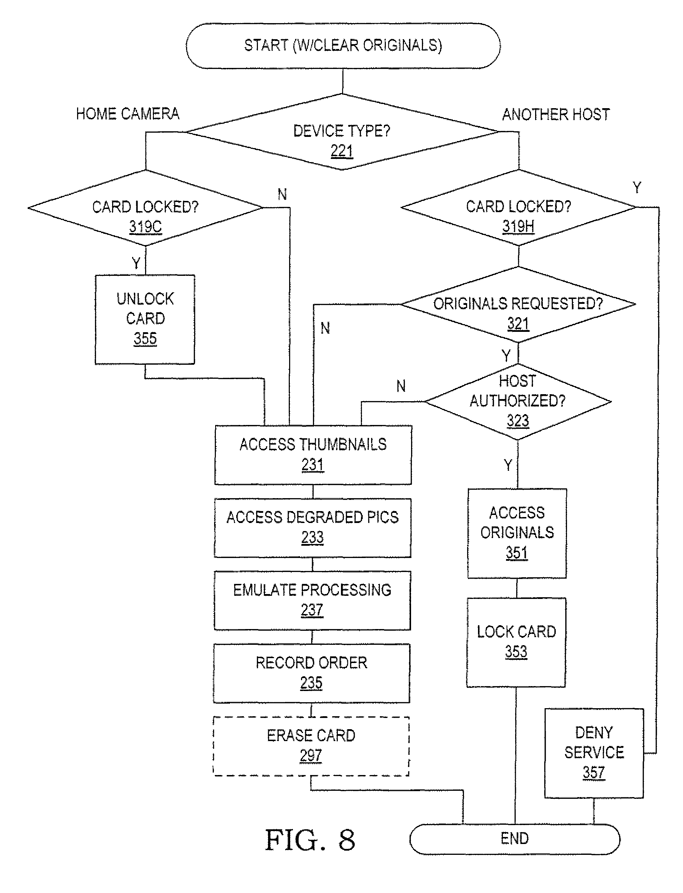

Figure 8 describes still another variation of Figures 6 and 7. In Figure 8 a camera **150** that has formatted a card **110** (hereinafter "home camera'' **150)** is identified to that card **110** in step **221.** Although such identification is not standard in the current art of digital camera cards, the ability of devices that interface with each other to identify the other device by a serial number or another unique ID is well supported by the art. In such a case, if card **110** is not locked (step **319C**) the home camera **150** can access thumbnails **204,** degraded pictures **205** and original pictures **202** (e.g. for printing) as represented by blocks **231, 233, 235** and **297.** If card **110** has been locked because card **110** has been accessed by an authorized printer, the camera **150** that took the source pictures has the ability **355** to unlock card **110** and then to access thumbnails **204,** degraded pictures **205** and original pictures **202.** This provides two advantages that enhance the configuration of Figure 7. First, if the user retrieves from commercial printer **130** his/her original card, s/he can add pictures to the same card instead of erasing the card. Second, if there was a fault in a host that has accessed the original pictures **202** but did not copy them all, original pictures **202** can be rescued by the home camera **150.** Any other host accesses card **110** as illustrated in Figure 7, unless card **110** has been locked (step **319H),** in which case access to card **110** is denied.

As described above, the authentication of authorized printers **130** by card **110** is made by cryptographic techniques known in the art, and preferably but not necessarily by using asymmetric keys.

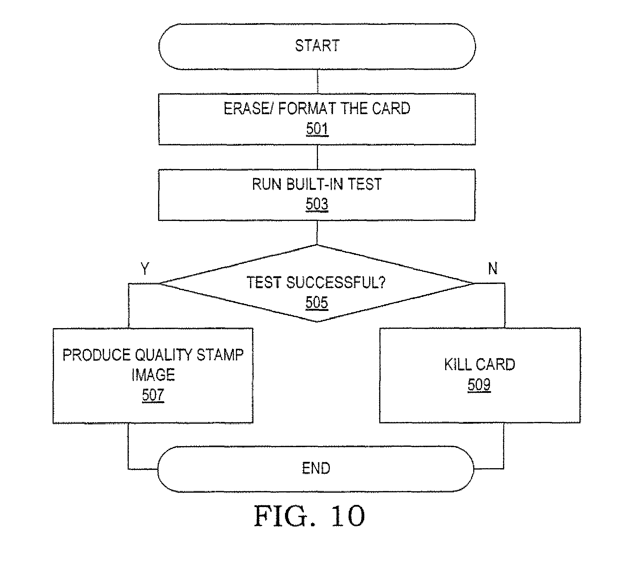

Figure 10 schematically describes the verified quality **200** feature of Figure 3. A user who receives a recycled card **110** wishes to be assured that the card **110** is perfectly operational. For this purpose, after the card **110** has been formatted is a step **501** by a printer **130,** a personal computer **170** or a camera **150,** in a step **503** processor **116** runs automatically a built-in test. If the test is found successful in a step **505,** then processor **116** produces a synthetic image of a quality stamp that shows as a normal picture when viewed through a camera screen or a personal computer. Otherwise the card **110** is made permanently inoperative in a step **509,** and any host of **card 110,** such as a camera **150,** a personal computer **170** or a printer **130,** will detect a malfunctioning card 110 under a standard procedure as known in the art.

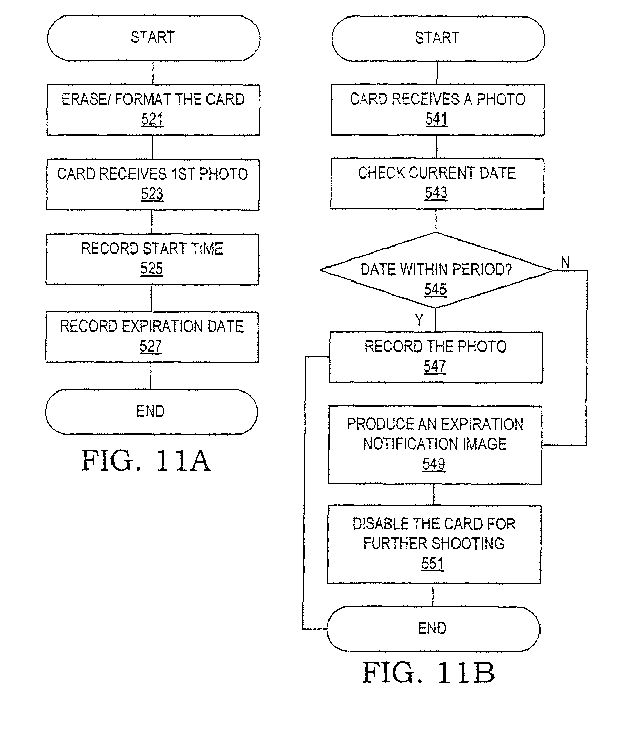

Figures 11A and 11B describe the feature of expiration date **198** of Figure 3, as executed by card processor **116.** In a step **521** a card is formatted. In a step **523** the card **110** receives the first photo from camera **150;** under standard file formats, the photo includes the current date. In a step **525** the current date is recorded in storage **112** of card **110** as the start date. In a step **527** the expiration date is calculated, *e.g.* by adding 90 days to the start date.

In a step **541,** a picture file other than the first picture after formatting, is received by card **110.** In a step **543,** processor **116** checks the current date from the received file, and in a step **545** processor **116** checks whether the current date is within the allowed period, *i.e.*, after the start date and before the expiration date previously recorded in storage **112** through steps **525** and **527.** If the date is within the allowed period, then in a step **547** the picture is recorded normally into storage **112:** otherwise, in a step **549,** processor **116** synthesizes an image notifying that the card **110** has expired and encouraging the user to print his/her images **202** at an authorized printer **130.** In a step **551,** card **110** is placed into a read-only mode, *i.e.,* is disabled for further shooting while the reading functionalities remain intact. This mode does not preven formatting, and is reset when card 110 is reformatted.

Figures 12A and 12B schematically describe the emulated processing step **237** of Figures 5-9, and the respective outcome which is implicitly included in printing the ordered prints step **293** in the same Figures. Thus, in a step **561** the user uses personal computer **170** to load a degraded picture from the area of degraded pictures **206** of storage **112** (Figure 2) and edit the degraded picture. Editing options are dependent on the degradation method used to produce a degraded picture: degradation by color allows primarily cropping; degradation by size allows cropping and limited color and contrast manipulation; degradation by marking allows all customary editing options, including cropping, color and contrast manipulation, digital filters, red-eye removal and special effects. In a step **563,** the edit instructions related to the current degraded picture (edit instructions **208-E** of Figure 2) are recorded by the editing software running on personal computer **170** onto storage **112** of card **110.** The technique of recoding editing parameters is well known, for example from the art of editing digital images taken in RAW format.

Figure 12B describes how the edit instructions recorded in step **563** are implemented to effect step **293** or **351** of printing in Figures 5-9. In a step **581** an authorized commercial printer **130** (Figure 1) accesses storage **112** to retrieve original pictures **202** and the parameters of order **208.** For each specific original picture whose printing quantity (included in quantity/paper instructions **208-Q)** is not null, edit instructions **208-E** are sought. If instructions **208-E** have previously been recorded in step **563** (Fig. 12A) then instructions **208-E** are retrieved in step **581.** In a step **583,** if the degraded image used in step **561** was of a different size (*e.g.* of degraded resolution), the edit instructions that relate to specific locations on the picture are transformed to fit the full size of the original. In a step **585** the edit instructions **208-E** are implemented on the respective original pictures and in a step **587** the edited versions are then printed according to the specified quantity and paper type and size in instructions **208-Q.**

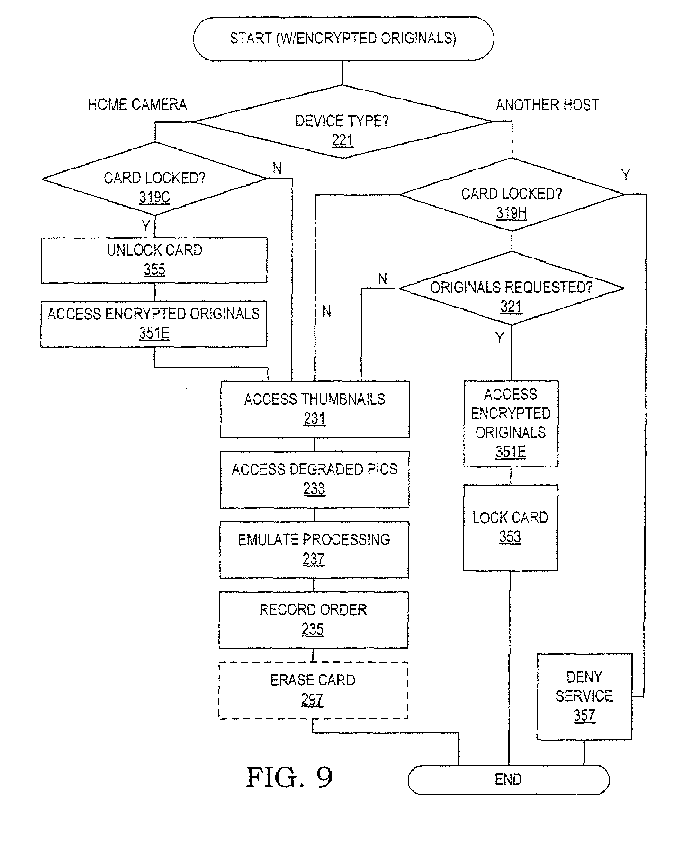

Figures 9 and 13A through 15B relate to additional preferred embodiments and to variations of the way that processor **116** of **FIG.** 1 processes and protects the original image data.

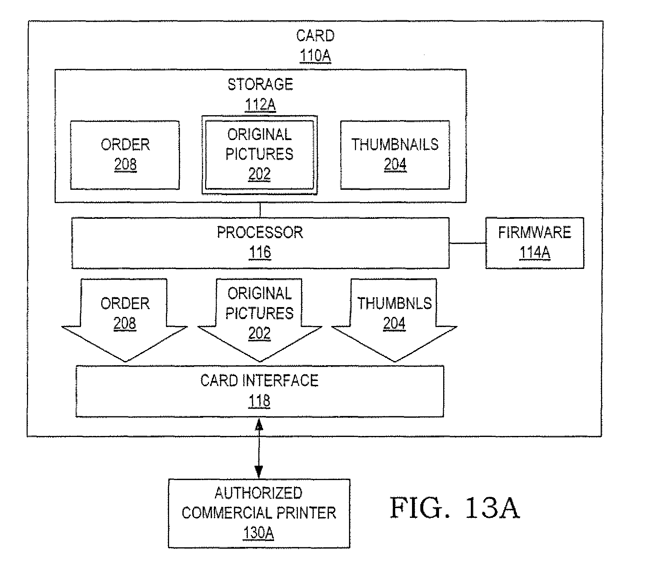

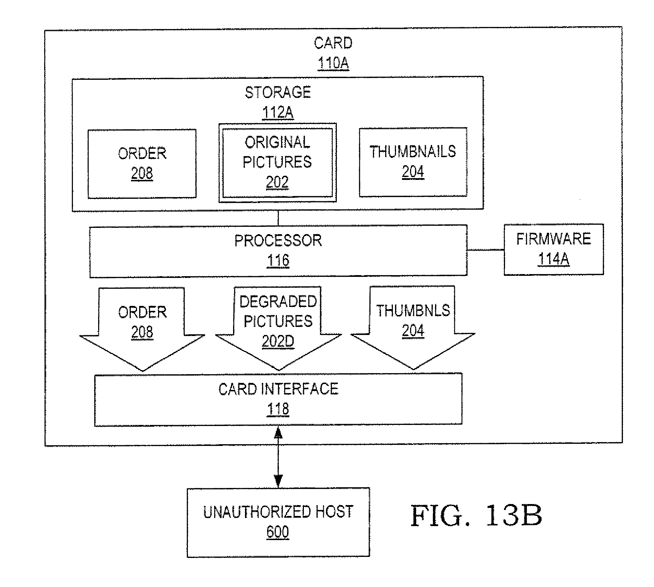

Reference is now made to Figures 13 A and 13B that illustrate an alternative embodiment to the embodiment of Figure 2. Whereas in the embodiment of Figure 2 degraded pictures **206** were produced by processor **116** and stored within storage **112,** the alternative embodiment of Figures 13A and13B keeps only the original pictures **202** in storage **112A** (optionally along with thumbnails **204** and order **208)** and processor **116** is operative to identify an authorized commercial printer **130A** and provide the original pictures **202** through card interface **118.** When interfacing with a unauthorized host **600** (Figure 13B), processor **116** executing firmware **114A** produces on-the-fly degraded pictures **202D** from original pictures **202** and provides degraded pictures **202D** to any unauthorized host **600** (optionally along with thumbnails **204** and order **208)** through card interface **118.** The embodiment of Figures 13A and 13B saves the memory needed for degraded pictures **206** (Figure 2) and the processing time of step **217** (Figure 4), but increases the time needed to read pictures by an unauthorized host **600** (Figure 13B) by the processing time required by processor **116** to produce the uploaded degraded pictures **202D.**

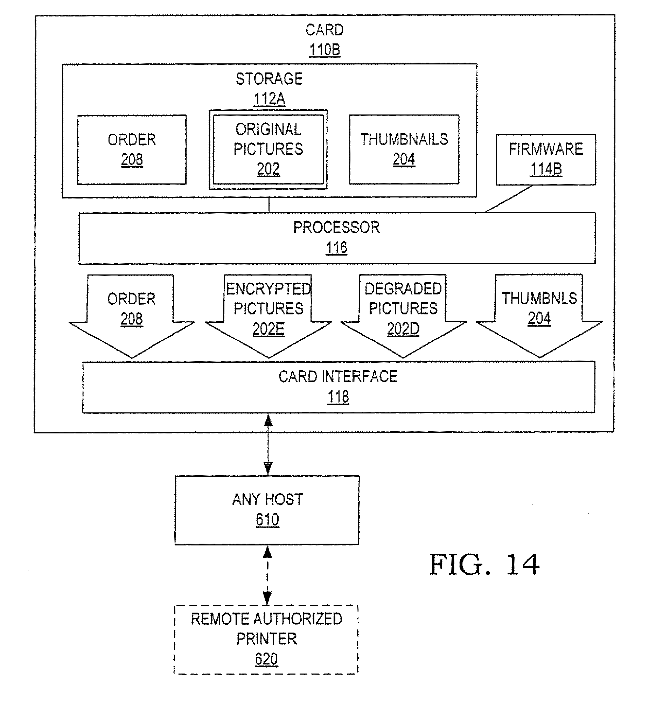

Figure 14 illustrates another preferred embodiment, in which the protected original pictures **202** are both encrypted and degraded on-the-fly by processor **116** under firmware **114B,** for selectably providing both an encrypted version **202E** and/or a degraded version **202D** to any host **610.** The encrypted version **202E** is useful only at authorized commercial printers that have the required keys in order to decrypt the original pictures, print the original pictures and/or burn the original pictures onto a CD as described above, while the degraded version is useful for all hosts for the purposes described above. Furthermore, any personal computer or similar host 610 that can connect to a remote authorized printer **620** through the Internet, cellular communication or any other electronic communication link, can transfer encrypted pictures **202E** to a remote authorized printer **620** for printing.

Figure 9 shows how Figure 8 is modified under the preferred embodiment in which original pictures **202** are stored in card **110** in encrypted form. After unlocking card **110** in step **355,** home camera **150** has access to encrypted original pictures **202** in step **351E**, and also the other permissions of steps **231,233,237, 235** and **297**. Any other host also has access to encrypted original pictures **202,** but encrypted original pictures **202** are useless to any host other than an authorized printer. After access of encrypted original pictures **202** by an authorized printer, card **110** preferably is locked in step **353** to protect the privacy of the user, as explained with respect to Figure 8.

Figures 15A and 15B illustrate another preferred embodiment of the present invention in which the original pictures are kept encrypted. Figure 15A shows card **110C** attached to a camera and operating in a picture-taking mode. Source pictures **202S** are received from the camera through card interface **118** and are encrypted on-the-fly by processor **116** under firmware **114C** for storing the original pictures as encrypted original pictures **202E** in storage **112A.** Thumbnails **204** optionally are supplied by the camera and stored in storage **112A,** and order **208** is recorded by any host at any time, as described with respect to Figures 13A, 13B and 14 above. Thus, no original image is stored or needs to be hardware-protected on storage **112A.** When connected to any host for output (Figure 15B), processor **116** executing firmware **114C** selectably provides any of order **208,** thumbnails **204,** encrypted pictures **202E,** or degraded pictures **202D** produced on-the-fly by processor **116** from encrypted pictures **202E,** possibly via decrypting followed by degrading. The usage of the encrypted version **202E** is as described with respect to Figure 14 above.

It should be noted that, under most practical scenarios, accessing degraded pictures by an authorized printer is redundant and may never be used. In the embodiments in which the originals are stored in clear in card **110** and are protected by processor **116** against access by any host other than an authorized printer, the originals preferably remain hidden from the user, who sees only the degraded versions instead. In embodiments in which card **110** produces both encrypted originals and degraded versions, users preferably ma access both versions, because although encrypted originals are useless for any host other than an authorized printer, the user may want to send an encrypted original to an authorized printer by other means, *e.g.* as an e-mail attachment.

While the invention has been described with respect to a limited number of embodiments, it will be appreciated that many variations, modifications and other applications of the invention may be made.

## Claims

1. A memory device comprising:
(a) a nonvolatile memory;
(b) a medium bearing instructions for:
(i) storing in said nonvolatile memory, as a corresponding original picture, each of at least one source picture received from a camera, and
(ii) for each said at least one original picture: producing a corresponding degraded picture; and
(c) a processor for executing said instructions.

2. The memory device of claim 1, wherein said instructions for producing said at least one degraded picture include instructions for producing each said degraded picture and then storing said each degraded picture in said nonvolatile memory when said original picture, to which said each degraded picture corresponds, is stored in said nonvolatile memory.

3. The memory device of claim 1, wherein said instructions for producing said at least one degraded picture include instructions for producing said at least one degraded picture and then storing said each degraded picture in said nonvolatile memory while the memory device is idle.

4. The memory device of claim 1, wherein said instructions for producing said at least one degraded picture include instructions for, in response to a request by a host of the memory device to access one of said at least one original picture, producing said degraded picture that corresponds to said one original picture and then sending said degraded picture to said host.

5. The memory device of claim 1, wherein said instructions for storing said at least one original picture in said nonvolatile memory include instructions for storing said at least one original picture in said nonvolatile memory only in encrypted form.

6. The memory device of claim 1, wherein said instructions for storing said at least one original picture in said nonvolatile memory include instructions for storing said at least one original picture in said nonvolatile memory in clear form.

7. The memory device of any preceding claim, wherein said medium also bears instructions for:
(iii) in response to a request by a host of the memory device to access one of said at least one original picture:
(A) encrypting said one original picture;
(B) denying said host access to said one original picture while allowing said host access to said encrypted original picture.

8. The memory device of any preceding claim, wherein said medium also bears instructions for:
(iii) allowing access to said at least one original picture only to an authorized host of the memory device.

9. The memory device of any preceding claim, wherein said medium also bears instructions for:
(iii) upon termination of an access of said at least one original picture by an authorized printer: locking the memory device.

10. The memory device of claim 9, wherein said medium also bears instructions for:
(iv) unlocking the memory device by said camera.

11. The memory device of any preceding claim, wherein said medium also bears instructions for:
(iii) verifying that the memory device is operational;
(iv) if the memory device is operational: producing an image of a quality stamp; and
(v) otherwise, rendering the memory device permanently inoperative.

12. The memory device of any preceding claim, wherein said medium also bears instructions for:
(iii) upon reaching a predetermined expiration date: disabling the memory device.

13. A method of digital photography, comprising the steps of:
(a) taking at least one source picture, using a camera;
(b) for each said at least one source picture, storing a corresponding original picture in a memory device; and
(c) for each said at least one original picture: producing a corresponding degraded picture, by said memory device.

14. The method of claim 13, wherein said at least one degraded picture is produced; and is stored in said memory device, when said at least one corresponding picture is stored in said memory device.

15. The method of claim 13, wherein said memory device produces and stores at least one degraded picture while said memory device is idle.

16. The method of claim 13, wherein, for any said original picture, said corresponding degraded picture is produced, and is sent to a host of the memory device, in response to a request by said host to access said any original picture.

17. The method of claim 13, wherein said at least one original picture is stored in said memory device only in encrypted form.

18. The method of claim 13, wherein said at least one original picture is stored in said memory device in clear form.

19. The method of any one of claims 13 to 18, further comprising the step of, in response to a request by a host of said memory device to access one of said at least one original picture:
(d) encrypting said one original picture, by said memory device; and
(e) denying said host access to said one original picture while allowing said host access to said encrypted original picture.

20. The method of any one of claims 13 to 19, further comprising the step of:
(d) allowing access to said at least one original picture only to an authorized host of said memory device.

21. The method of any one of claims 13 to 20, further comprising the step of:
(d) upon termination of an access of said at least one original picture by an authorized printer: locking said memory device.

22. The method of claim 21, further comprising the step of:
(e) unlocking said memory device, by said camera.

23. The method of any one of claims 13 to 22, further comprising the step of:
(d) verifying that said memory device is operational, by said memory device;
(e) if said memory device is operational: producing an image of a quality stamp, by said memory device; and
(f) otherwise, rendering the memory device permanently inoperative.

24. The method of any one of claims 13 to 23, further comprising the step of:
(d) upon reaching a predetermined expiration date: disabling said memory device.
